(19) **Europäisches Patentamt**

**European Patent Office**

**Office européen des brevets**

(11) **EP 1 560 399 A1**

(12) **EUROPÄISCHE PATENTANMELDUNG**

(43) Veröffentlichungstag:
**03.08.2005 Patentblatt 2005/31**

(51) Int Cl.⁷: **H04L 29/08**, H04L 29/12

(21) Anmeldenummer: **04014921.3**

(22) Anmeldetag: **25.06.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **Siemens Schweiz AG**
**8047 Zürich (CH)**

(72) Erfinder: **Schenk, Michael**
**Hettlingen (CH)**

(74) Vertreter: **Kley, Hansjörg**
**c/o Siemens AG**
**Patentabteilung**
**Postfach 22 16 34**
**80506 München (DE)**

(54) **Verfahren zur Auflösung einer numerischen Adresse**

(57) Für den Dienst Voice over IP stellt sich das Problem der Bestimmung der IP-Adresse des anzurufenden Teilnehmers (U4, B-Subs). Der anzurufende Teilnehmer (U4, B-Subs) ist in aller Regel durch eine Telefonnummer (E.164) identifizierbar, ggf. über die Telefonnummer (E.164) auch adressierbar. Die Auflösung einer Telefonnummer (E.164) wurde bis jetzt meist über zentrale Instanzen gelöst. Anstelle einer (anfälligen) zentralen Instanz wird vorgeschlagen, dass von einem an einem «Peer-to-Peer»-Netzwerk (30) angeschlossenen Gerät (U1, A-Subs) mittels kaskadierter und ggf. mehrfacher Anfragen ($R_1$, $R_2$, ..) Partnergeräte (U2, U3, ..) solange abgefragt werden, bis die IP-Adresse des durch eine E.164-Telefonnummer identifizierten B-Teilnehmers (U4, B-Subs) gefunden wurde und somit eine Sprachverbindung ($COM_{SP}$) zwischen den beiden Teilnehmern (A-Subs, B-Subs) aufgebaut werden kann.

Fig 1

EP 1 560 399 A1

**Beschreibung**

Die vorliegende Erfindung betrifft ein Verfahren zur Auflösung einer numerischen Adresse gemäss dem Oberbegriff des Patentanspruchs 1.

Die «Internet Telefonie», d.h. Voice over IP beginnt sich zu etablieren. Noch besteht das Problem darin, das für eine Sprachverbindung über das Internet ein Personalcomputer erforderlich ist. Zur Adressierung eines Teilnehmers ist meist eine Telefonnummer, genau eine sogenannte E.164-Nummer bekannt, die jedoch nicht zur direkten Adressierung eines oder des Personalcomputers der betreffenden Person benutzt werden kann. Für viele Benutzer, d.h. A-Teilnehmer, ist es daher wünschenswert, wenn für eine aufzubauende Sprachverbindung VoIP ein normaler (analoges) Telefonapparat oder wenigstens die bekannten E.164-Nummern benutzt werden könnten. Da für eine Kommunikation über das Internet die IP-Adresse des B-Teilnehmers benötigt wird und diese IP-Adresse wegen der DHCP-Dienste dynamisch vergeben wird, ist es nicht ohne weiteres dazutun möglich, zu einer gegebenen E.164-Telefonnummer die korrespondierende IP-Adresse zu finden und somit zum betreffenden B-Teilnehmer eine Sprachverbindung aufzubauen.

Zur Vermeidung von Unklarheiten und im Sinne einer konzisen Fachsprache wird in dieser Schrift teilweise auf die englisch-sprachigen Fachbegriffe zurückgegriffen. Zur Erläuterung der verwendeten Begriffe und Akronyme wird auf die am Schluss dieses Dokuments angegebenen Listen verwiesen.

Das Problem der Auflösung einer E.164-Telefonnummer - im Kontext dieser Schrift auch numerische Adresse genannt - wurde bis jetzt meist über zentrale Instanzen gelöst.

Im Dokument RFC 2916 von IETF ist das Protokoll zum Dienst E2U spezifiziert, der eine Umwandlung einer E.164-Nummer in eine URI erlaubt.

In EP 1 207 704 B1 ist über eine (verteilte) DNS-Datenbank ein Verfahren zum Auffinden einer Telefonnummer offenbart, bei dem die anzurufenden Teilnehmer durch eine URI definiert sind. Eine Umkehrung dieses Verfahrens zur Auflösung einer Telefonnummer in eine URI oder in eine IP-Adresse ist nicht möglich, da die Zuordnung von URI und E.164-Telefonnummer meist nicht bijektiv ist.

Der vorliegenden Erfindung liegt daher die Aufgabe zugrunde, ein Verfahren anzugeben, das in einer nicht zentralen Weise erlaubt, zu einem durch eine E.164-Telefonnummer identifizierten Teilnehmer eine IP-Adresse zu bestimmen um damit eine VoIP-Sprachverbindung aufbauen zu können.

Diese Aufgabe wird erfindungsgemäss durch das im Patentanspruch 1 angegebene Verfahren gelöst.

Gemäss den erfindungsgemässen Verfahrensschritten, wonach

A zur Auflösung der numerischen Adresse eines gesuchten Gerätes wird vom ersten Gerät eine Anfrage an wenigstens ein anderes Gerät gerichtet, wobei die Anfrage die gesuchte numerische Adresse enthält;
B weist im Verfahrensschritt A das andere Gerät die gesuchte numerische Adresse nicht auf, wird der Verfahrensschritt A vom anderen Gerät wiederholt;
C weist im Verfahrensschritt A das andere Gerät die gesuchte numerische Adresse auf, wird vom gesuchten Gerät seine Netzwerkadresse an das ursprüngliche erste Gerät mittels Antwortmeldungen übermittelt;

ist ein Verfahren geschaffen, dass auf zuverlässige Weise die Netzwerkadresse eines durch eine numerische Adresse identifizierten Gerätes ermittelt, wobei durch die Speicherung der numerischen Adresse im jeweiligen Gerät auch bei einer dynamisch oder symbolisch vergebenen Netzwerkadresse stets sichergestellt ist, dass eine zutreffende Netzwerkadresse ermittelt wird. Auf dem gesuchten Gerät muss seine Netzwerkadresse notwendigerweise bekannt sein.

Im Sinne dieser Schrift und erfindungsgemässen Lehre sind die verwendeten Begriffe wie folgt zu verstehen und beinhalten nachfolgend beschriebene Ausprägungen:

i) Unter dem Begriff «Peer-to-Peer» wird ein Netzwerk subsummiert, bei dem die Angeschlossenen Geräte, d.h. Rechner alle gleichrangig sind und gleichzeitig als Server oder als Client fungieren können. Ein typisches Beispiel eines «Peer-to-Peer»-Netzwerkes sind sogenannte «File-Sharing-Networks».
ii) Gerät, Rechner, Teilnehmer und Subscriber bezeichnen die gleiche Einheit, die Begriffe sind jedoch auf den jeweiligen Kontext abgestimmt, wie beispielsweise:

- Gerät, Rechner an einem Netzwerk angeschlossen;
- Teilnehmer (keine Person) im Sinne des POTS, wobei als Zugangstechnologie ISDN ganz und gar nicht ausgeschlossen ist; Subscriber ist die englische Fachbezeichnung für Teilnehmer.

Vorteilhafte Ausgestaltungen und Implementationen des erfindungsgemässen Verfahrens sind in weiteren Ansprüchen angegeben.

Ausführungsbeispiele der Erfindung werden nachfolgend anhand der Zeichnung anhand näher erläutert. Dabei zeigt:

Figur 1 Darstellung eines «Peer-to-Peer»-Netzwerkes mit vier Geräten;
Figur 2 erstes Ausführungsbeispiel eines «embedded Peer-to-Peer client»;
Figur 3 zweites Ausführungsbeispiel eines «embedded Peer-to-Peer client».

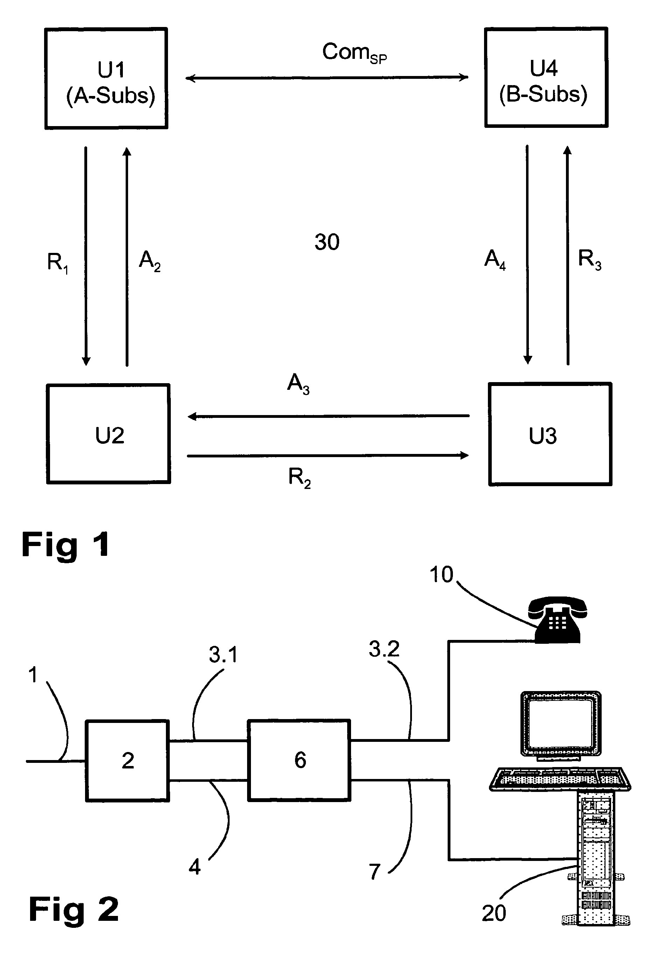

Im Sinne der vorstehend eingeführten Nomenklatur zeigt die Figur 1 ein «Peer-to-Peer»-Netzwerk 30. Die Angaben in der Figur 1 dienen lediglich der Erläuterung des erfindungsgemässen Verfahrens und haben mit der Topologie wie auch mit einer geographischen Anordnung der Geräte U1, U2, U3 und U4 nichts gemeinsam.

Es wird angenommen, dass vom Gerät U1 eine Sprachverbindung COM$_{SP}$ zum Gerät U4 aufgebaut werden soll, wobei für das Gerät U4 lediglich die E.164-Telefonnummer zur Identifizierung bekannt ist. Zu beachten ist, dass das Gerät U4 gemäss der vorliegenden Netzwerkkonfiguration durch die E.164-Telefonnummer nicht direkt adressierbar ist.

Zur Bestimmung der netzwerkbezogenen Adresse des gesuchten Gerätes U4 erfolgt vom Gerät U1 eine Anfrage A1, in der die E.164-Telefonnummer enthalten ist mittels einer Meldung R1. Für die konkrete Ausgestaltung der Abfragefolge R$_1$, R$_2$ in einem «Peer-to-Peer»-Netzwerke wird auf bekannte Verfahren zurückgegriffen wie beispielsweise «chord», «kademlia», «gnutella» oder «eDonkey». Fundstellen zu den vorgenannten Verfahren sind in der Liste der zitierten Schriften angegeben. Die letzten zwei genannten Verfahren «gnutella» und «eDonkey» haben teilweise zentrale Instanzen.

Die Abfragemeldung R$_1$. enthält die E.164-Telefonnumer in der Art

$$+41\ 1\ 495\ 30\ 00$$

sowie gegebenenfalls auch ein TTL-Feld, um die Anfrageanzahl bzw. deren Beantwortung mit einer Antwortmeldung A an ein Gerät U zu beschränken.

Durch die Verwendung der File-Sharing-Technologie auf den am «Peer-to-Peer»-Netzwerk angeschlossen Geräten U1, U2, U3, .. kann auf einfache Weise festgestellt werden, ob einem Gerät U die gesuchte E.164-Nummer zugeordnet ist. Beispielsweise kann auf den Geräten U1, U2, .. im öffentlich zugänglichen Dateibereich in einem vordefinierten Verzeichnis eine Datei vorgesehen sein, deren Dateiname ein Abbild der E.164 Nummer darstellt. Wird nun bei einer der vorgenannten Abfrage eine Übereinstimmung zwischen Inhalt der Abfrage R und dem vorgenannten Dateinamen festgestellt, erfolgt eine Antwort mit einer die IP-Adresse des betreffenden Gerätes U4 enthaltenden Meldung A an das anfragende Gerät U1. Damit kann vom Gerät U1 aus das Gerät U4 direkt adressiert werden und auf diese Weise eine VoIP-Verbindung aufgebaut werden.

Es kann über die vorgenannten «Peer-to-Peer-Verfahren «chord», «kademlia», «gnutella» oder «eDonkey» vorgesehen sein, dass zusätzlich eine Antwortmeldung A$_n$ vorgesehen ist, wonach keine E.164-Nummer gefunden wurde. Eine solche Meldung kann in einer konkreten Implementation benutzt werden, um in einer Rückfallebene über POTS/ISDN eine Sprachverbindung aufbauen zu können.

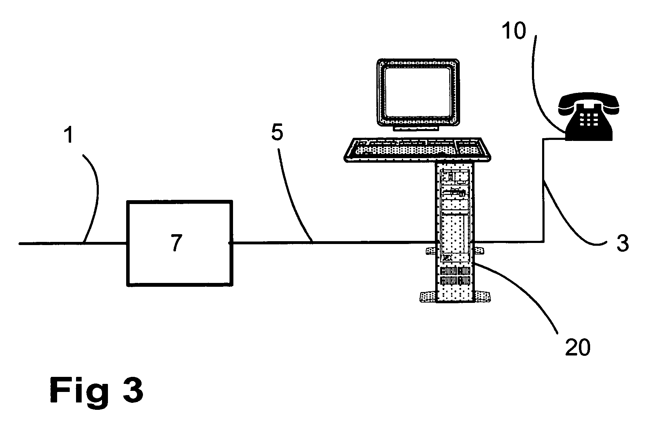

Für eine konkrete Implementation des erfindungsgemässen Verfahrens wird nun auf die Figuren 2 und 3 Bezug genommen.

Figur 2 zeigt eine Anschlusskonfiguration in einem Privathaushalt. An einer Anschlussleitung 1 mit ADSL over POTS oder ADSL over ISDN ist ein Splitter 2 angeschlossen. Der Splitter 2 galvanisch getrennt über Leitungen 4 und 3.1 mit einem Router 6 verbunden. Anstelle des allgemeinen Begriffs Router 6 wird in diesem Kontext die spezifischere Bezeichnung Netzzugangsgerät «Integated Access Device» IAD verwendet. Über die Leitungen 4 und 3.1 werden die Dienste ADSL und POTS übertragen. Im «Integrated Access Device» 6 ist ein «embedded Peer-to-Peer client» enthalten. Auf die übliche Weise ist ein Personalcomputer 20 an einer Leitung 7 angeschlossen, die Übertragungstechnik kann dabei USB oder Ethernet sein. An der Leitung 3.2 ist ein konventioneller Telefonapparat 10 angeschlossen, die Schnittstelle wird dabei mit a/b bezeichnet und entspricht dem bekannten Dienst POTS. Die Implementation des erfindungsgemässen Verfahrens im «Integrated Access Device» 6 bedingt, dass die Telefonnummer des betreffenden Benutzers konfiguriert sein muss. Dies kann manuell über eine Konsole, einen Webserver oder den Telefonapparat 10 mit DTMF erfolgen. Möglich ist auch eine automatische Konfiguration, insbesondere dann, wenn über die Verbindungsleitung 3.1 ein ISDN-Anschluss, vorzugsweise ein Basic-Access 2B+D, konfiguriert ist. Das erfindungsgemässe Verfahren erlaubt nun einer Person die Nutzung des Dienstes VoIP wie folgt:

Für eine vom Telefonapparat 10 gewählte E.164-Nummer wird nun durch den im «Integrated Access Device» 6 implementierten «embedded Peer-to-Peer client» mit dem erfindungsgemässen Verfahren die IP-Adresse des gesuchten Teilnehmers B-Subs ermittelt und anschliessend eine Sprachverbindung COM$_{SP}$ aufgebaut. Darüber hinaus kann im «embedded Peer-to-Peer client» vorgesehen werden, dass eine Wahlbewertung vorgenommen wird und Dienstnummern wie z.B. 117 (Polizeinotruf) direkt über den Dienst POTS geroutet werden. Ebenso ist es möglich, den Dienst POTS als Rückfall-Ebene zu benutzen für den Fall wo die IP - Verbindung nicht zur Verfügung steht oder mit dem erfindungsgemässen Verfahren keine korrespondierende IP-Adresse gefunden wird. Der besondere Vorteil dieser Implementation beruht darauf, dass für den Sprachdienst kein Personalcomputer eingeschaltet sein muss und übertragungsdienstmässig betrachtet eine Rückfallebene genutzt werden kann.

Die Anschlusskonfiguration gemäss der Figur 3 kann sich auf einem Privathaushalt oder eine Büroumgebung beziehen. Ein Router 6 oder ein «Integrated Access Device» 6 ist über eine Verbindungsleitung 1 angeschlossen. Als Transportdienste sind hier Ethernet, ADSL, ATM usw. denkbar, so dass auf einer logischen Ebene der Router 6 mit einem WAN oder LAN verbunden ist. In der Konfiguration gemäss der Figur 3 ist das erfindungsgemässe Verfahren als «Peer-to-Peer Client» softwaremässig auf einem Personalcomputer 20 implementiert. Am Personalcomputer 20 ist ein Telefonapparat 10 auf die übliche Weise mittels einer Leitung 3 angeschlossen. Die Nutzung des erfindungsgemässen Verfahrens bedingt bei der Konfiguration gemäss der Figur 3, dass der Personalcomputer 20 eingeschaltet sein muss. Vorteilhaft bei dieser Konfiguration ist jedoch die leichte Nachführung des erfindungsgemässen Verfahrens durch einen Download.

Die vorgenannten zwei Ausführungsbeispiele einer Implementierung des erfindungsgemässen Verfahrens sind nicht abschliessend zu verstehen. Insbesondere können zusätzliche Schnittstellen die Redundanz eines VoIP-Dienstes weiter verbessern.

**Liste der verwendeten Bezugszeichen**

| | |
|---|---|
| 1 | Anschlussleitung mit den Übertragsdiensten ADSL oder ADSL over PSTN oder ADSL over ISDN |
| 2 | Splitter |
| 3, 3.1, 3.2 | POTS, ISDN |
| 4 | ADSL |
| 5 | Ethernet, USB |
| 6 | Router, Netzzugangsgerät, Integrated Access Device IAD |
| 7 | Router, Netzzugangsgerät, Integrated Access Device IAD |
| 10 | Telefonapparat |
| 20 | Rechner, Personalcomputer, Rechnereinheit |
| 30 | «Peer-to-Peer»-Netzwerk |
| A-Subs | A-Teilnehmer(Subscriber) |
| B-Subs | B-Teilnehmer (Subscriber) |
| A, $A_i$ | Antwort von der Rechnereinheit Ui, in indizierter Notation |
| $A_n$ | Antwortmeldung, wonach keine numerische Adresse gefunden wurde |
| $COM_{SP}$ | Sprachverbindung |
| R, $R_j$ | Anfrage von der Rechnereinheit Uj in indizierter Notation |
| U, U1, U2, U3, U4 | Rechner, Personalcomputer, Rechnereinheit in "nummerierter" Notation |

**Liste der verwendeten Abkürzungen**

ATM        Asynchron Transfer Mode

DHCP       Dynamic Host Configuration Protocol

DNS        Domain Name Service

E2U        E.164 to URI; aus RFC 2916

IAD        Integrated Access Device

IP         Internet Protocol

LAN        Local Area Network

POTS       Plain Old Telephone Service

TTL        Time-to-live

URI        Universe Resource Identifier

VoIP       Voice over Internet Protocol

WAN        Wide Area Network

**Liste der zitierten Schriften; Angaben zu Fundstellen**

Chord      http://www.eurecom.fr/
           z.B. Hierarchical P2P Systems
           Garcés-Erice, Louis; Biersack, Ernst W. et al.

kademlia http://kademlia-net.de/index.php
eDonkey http://www.edonkey2000.com
gnutella http://www.openp2p.com

E.164             The international public telecommunication numbering plan; ITU-T Recommendation E.164
EP 1 207 704 B1   Hewlett-Packard Company, Palo Alto, CA 94304 US; «DNS-based determination of a telephone
                  number for contacting a target entity»

**Patentansprüche**

**1.** Verfahren zur Auflösung einer numerischen Adresse (E.164) für eine Verbindung von einem ersten Gerät (U1) zu einem gesuchten Gerät (U4), wobei eine Vielzahl von Geräten (U1, U2, ..) an einem Peer-to-Peer-Netzwerk (30) angeschlossen ist und die Geräte (U1, U2, ..) durch eine netzwerkbezogene Adresse (IP-Addr, URI) direkt adressierbar sind und wobei ferner am Peer-to-Peer-Netzwerk angeschlossene Geräte (U1, U2, ..) eine numerische Adresse (E.164) aufweisen, die im betreffenden Gerät (U1, U2, ..) gespeichert ist,
**gekennzeichnet durch** die Verfahrensschritte:

A zur Auflösung der numerischen Adresse (E.164) eines gesuchten Gerätes (U4, B-Subs) wird vom ersten Gerät (U1) eine Anfrage ($R_1$) an wenigstens ein anderes Gerät (U2) gerichtet, wobei die Anfrage ($R_1$) die gesuchte numerische Adresse (E.164) enthält;
B weist im Verfahrensschritt A das andere Gerät (U2) die gesuchte numerische Adresse (E.164) nicht auf, wird der Verfahrensschritt A vom anderen Gerät (U2) wiederholt;

C weist im Verfahrensschritt A das andere Gerät (U2, U3, ..) die gesuchte numerische Adresse (E.164) auf, wird vom gesuchten Gerät (U4) seine Netzwerkadresse (IP-Addr, URI) an das ursprüngliche erste Gerät (U1) mittels Antwortmeldungen ($A_3$, $A_{2'}$ ..) übermittelt.

**2.** Verfahren nach Anspruch 1,
**dadurch gekennzeichnet, dass**
nach erfolgter Ausführung des Verfahrensschrittes C vom ersten Gerät (U1, A-Subs) mit dem gesuchten Gerät (U4, B-Subs) eine Sprachverbindung ($COM_{SP}$) aufgebaut wird.

**3.** Verfahren nach Anspruch 1 oder 2,
**dadurch gekennzeichnet, dass**
die numerische Adresse eine E.164-Telefonnummer ist.

**4.** Verfahren nach einem der Ansprüche 1 bis 3,
**dadurch gekennzeichnet, dass**
die Netzwerkadresse der Geräte (U1, U2, ..) eine IP-Adresse ist.

**5.** Verfahren nach einem der Ansprüche 1 bis 4,
**dadurch gekennzeichnet, dass**
im Verfahrensschritt B ein Abbruch-Kriterium definiert ist für den Fall, dass keine numerische Adresse (E.164) gefunden wird und dass eine diese Information enthaltende Antwortmeldung ($A_n$) an das erste Gerät (U1) gesandt wird.

**6.** Netzzugangsgerät (6, IAD) zur Durchführung des Verfahrens nach einem der Ansprüche 1 bis 5,
**dadurch gekennzeichnet, dass**
dass Verfahren als «embedded Peer-to-Peer client» im Netzzugangsgerät (6, IAD) implementiert ist.

**7.** Personalcomputer (20) zur Durchführung des Verfahrens nach einem der Ansprüche 1 bis 5,
**dadurch gekennzeichnet, dass**
dass Verfahren als «embedded Peer-to-Peer client» im Personalcomputer (20) implementiert ist.

**8.** Datenträger, auf dem ein Programm zur Ausführung der Verfahrenschritte gemäss einem der Ansprüche 1 bis 5 gespeichert ist.

**Fig 1**

**Fig 2**

**Fig 3**

**Europäisches**
**Patentamt**

**EUROPÄISCHER RECHERCHENBERICHT**

Nummer der Anmeldung

EP 04 01 4921

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 2003/095546 A1 (SAKANO TSUNEYUKI ET AL) 22. Mai 2003 (2003-05-22)<br>* Zusammenfassung *<br>* Absätze [0013], [0014] *<br>* Absätze [0026] - [0037] *<br>* Absätze [0041] - [0043] *<br>* Absätze [0047] - [0049] *<br>* Absätze [0051] - [0056] *<br>* Abbildungen 1,2,6 *<br>----- | 1-8 | H04L29/08<br>H04L29/12 |
| X | DE 102 30 684 A (SIEMENS AG) 29. Januar 2004 (2004-01-29)<br>* Zusammenfassung *<br>* Absätze [0008] - [0012] *<br>* Absatz [0016] *<br>* Absätze [0023] - [0026] *<br>* Absätze [0029], [0030] *<br>----- | 1-8 | |
| | | | **RECHERCHIERTE SACHGEBIETE (Int.Cl.7)**<br><br>H04L |

Der vorliegende Recherchenbericht wurde für alle Patentansprüche erstellt

| Recherchenort | Abschlußdatum der Recherche | Prüfer |
|---|---|---|
| Den Haag | 9. November 2004 | Hes, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 04 01 4921

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-11-2004

| Im Recherchenbericht angeführtes Patentdokument | Datum der Veröffentlichung | Mitglied(er) der Patentfamilie | Datum der Veröffentlichung |
|---|---|---|---|
| US 2003095546 A1 | 22-05-2003 | JP 2003158553 A<br>CN 1422045 A | 30-05-2003<br>04-06-2003 |
| DE 10230684 A | 29-01-2004 | DE 10230684 A1<br>WO 2004006530 A1 | 29-01-2004<br>15-01-2004 |

EPO FORM P0461

Für nähere Einzelheiten zu diesem Anhang : siehe Amtsblatt des Europäischen Patentamts, Nr.12/82